# EUROPÄISCHE PATENTANMELDUNG

(11) **EP 0 956 980 A2**
(43) Veröffentlichungstag der Anmeldung: **17.11.1999**
(21) Anmeldenummer: 99107929.4
(22) Anmeldetag: 22.04.1999
(51) Int. Cl.: B60C 5/00, B60C 19/00

(54) **Kraftfahrzeugrad**

(30) Priorität: 08.05.1998 DE 19820590
(71) Anmelder: Continental Aktiengesellschaft, 30165 Hannover (DE)
(72) Erfinder: Dieckmann, Andreas, 30163 Hannover (DE); Huinink, Heinrich, 30823 Garbsen (DE); Gauterin, Frank Dr., 31535 Neustadt (DE); Schürmann, Oliver Dr., 30855 Langenhagen (DE)

(57) **Zusammenfassung**

Die Erfindung betrifft ein Kraftfahrzeugrad mit einem auf eine Felge (1) aufgebrachten Reifen, in dessen Innenraum, auf der Felge (1) umlaufend, ein schallabsorbierender Ring (5, 5', 5'') aus offenporigem Schaumstoff untergebracht ist. Der Schaumstoffring (5, 5', 5'') ist an seiner mit der Felge (1) in Kontakt tretenden Fläche mit einer luftundurchlässigen Schicht (6, 6', 6'') versehen.

## Beschreibung

Die gegenständliche Erfindung betrifft ein Kraftfahrzeugrad mit einem auf eine Felge aufgebrachten Reifen, in dessen Innenraum, auf der Felge umlaufend, ein schallabsorbierender Ring aus offenporigem Schaumstoff untergebracht ist.

Die während des Abrollens eines Reifens entstehenden Reifenschwingungen sind bekannterweise eine der Hauptursachen der als störend empfundenen Lärmabstrahlung von Kraftfahrzeugen. Dabei ist insbesondere die im Reifentorus entstehende Schalleistung sehr hoch, wobei die dort auftretenden Schallschwingungen zum Teil über Kraftfahrzeugteile in den Fahrzeuginnenraum übertragen und zum Teil über die Reifenseitenwände nach außen abgestrahlt werden. Es ist bekannt, daß der Einbau von schallabsorbierenden Materialien im Reifeninnenraum die abgestrahlte Schalleistung reduziert.

So ist beispielsweise aus dem deutschen Patent Nr. DE 29 46 273 C2 eine Einrichtung zur Verringerung des Reifenlärms von Fahrzeugen bekannt, bei der an der Felge schallabsorbierende und offenporige Bauteile angeordnet sind, die von dort ohne Kontakt mit der Reifeninnenfläche in den Innenraum des Reifens ragen.

Die aus der DE 44 00 912 A bekannte Lösung befaßt sich damit, eine wirkungsvolle Reduktion der sich im Torusraum ausbildenden Schallwellen unter Bedachtnahme auf eine einfache Montage- und Demontagemöglichkeit zu erzielen. Dazu wird vorgeschlagen, das schalldämmende Material in einen flexiblen Schlauch einzubringen, der auf Grund seiner Flexibilität gemeinsam mit dem Reifen auf der Felge montiert werden kann. Die Ausführung als Schlauch bringt den Vorteil einer leichten Montage mit sich. Bei höheren Geschwindigkeiten, wo die auftretenden Fliehkräfte schon groß sind, sind der relativ lose Sitz dieses Einbaus an der Felge und dessen Gewicht von Nachteil.

Aus dem deutschen Patent DE 30 42 350 C2 ist ferner ein Fahrzeugluftreifen bekannt, dessen Innenflächen ganz oder teilweise mit einem geräuschmindernden Belag aus offenzelligem Schaumstoff ausgekleidet sind. Um eine wirksame Dämpfung des Körperschalls in den physiologisch besonders bedeutsamen Frequenzbereichen zu erzielen, wird dabei vorgeschlagen, einen speziellen, körperschalldämpfenden und vernetzten Polyurethanschaumstoff in einer bestimmten Schichtdicke zu verwenden.

Offenporiger Schaumstoff ist an und für sich besonders gut geeignet, den Luftschallpegel im Reifeninnenraum zu senken. Dem Fachmann ist dabei eine Reihe von Schaumstoffen bekannt, die den jeweiligen Anforderungen gut gerecht werden. Bei der Auswahl eines geeigneten Schaumstoffes ist dabei auf einen guten Schallabsorptionsgrad, schon bei tiefen Frequenzen, zu achten. Darüber hinaus ist es bekannt, daß auch andere Materialien für die Schallabsorption im Reifeninneren in Frage kommen, beispielsweise schalldämmende Einbauten die aus Watte, Wolle, Filz oder ähnlichen Materialien bestehen.

Vor allem bei höheren Geschwindigkeiten ist nun die Fliehkraftbeständigkeit von schalldämmenden Einbauten im Reifeninneren von besonderer Bedeutung. Bei schallabsorbierenden Einbauten, die auf der Felge angebracht werden sollen, ist es in diesem Zusammenhang besonders wichtig, daß der schallabsorbierende Einbau, der Schaumstoffring, besonders gut an der Feige sitzt und sich auch bei höheren Geschwindigkeiten nicht ablöst. Ein Ablösen unter dem Einfluß der Fliehkraft könnte vor allem unerwünschte Veränderungen in den Schallabsorptionseigenschaften durch im Material auftretende Deformationen bewirken. Darüber hinaus hat ein solches Ablösen auch negative Folgen für den Rundlauf des Reifens. Aus diesem Grund ist auch von Bedeutung, daß das schallabsorbierende Material ein möglichst geringes Gewicht besitzt. Bislang wurde keine zufriedenstellende Art des Anbringens von schallabsorbierenden Einbauten an der Feige aufgefunden, insbesondere keine solche, die eine sichere Festlegung des schallabsorbierenden Einbaus an der Felge gewährleistet.

Hier setzt nun die Erfindung ein, deren Aufgabe darin besteht, eine einfache, gleichzeitig möglichst sichere und auch höheren Geschwindigkeiten und somit höheren Fliehkräften standhaltende Möglichkeit der Festlegung eines Schaumstoffringes an der Feige aufzufinden.

Gelöst wird die gestellte Aufgabe erfindungsgemäß dadurch, daß der Schaumstoffring an seiner mit der Feige in Kontakt tretenden Fläche mit einer luftundurchlässigen Schicht versehen ist.

Bei der vorliegenden Erfindung wird daher der Schaumstoffring, der ja aus offenporigem Schaum besteht, beim Befüllen des Reifens mit Luft und auch im nachfolgenden Betrieb des Reifens durch den Fülldruck an die Felge gepreßt. Durch dieses selbsttätige Festpressen des Schaumstoffringes an der Felge ist gewährleistet, daß der Schaumstoffring auch bei höheren Geschwindigkeiten seinen festen Sitz an der Felge behält.

Gemäß einer bevorzugten Ausführungsform der Erfindung ist die luftundurchlässige Schicht flexibel ausgeführt. Dies erleichtert insbesondere das Hantieren mit dem Schaumstoffring beim Aufbringen desselben auf die Felge.

Die luftundurchlässige Schicht selbst kann bevorzugt aus Gummi oder Kunststoff, und hier insbesondere aus einer Kunststoffolie, bestehen. Bei einer alternativen Ausführungsform der Erfindung wird die luftundurchlässige Schicht aus einer Schicht aus geschlossenzelligem Schaum gebildet.

Es gibt eine Anzahl von einfachen Möglichkeiten, die luftundurchlässige Schicht mit dem Schaumstoffring zu verbinden. Bei einer der möglichen Ausführungsformen der Erfindung wird die Verbindung durch Kleben hergestellt, bei einer anderen erfindungsgemäßen Ausführungsvariante wird die luftundurchlässige Schicht mit dem Schaumstoffring durch Vulkanisieren verbunden.

Eine besonders haltbare Verbindung des Schaumstoffes mit der luftundurchlässigen Schicht kann dadurch erreicht werden, daß die luftundurchlässige Schicht mit dem Schaumstoff beim Aufschäumen desselben verbunden wird.

Eine besonders einfache Ausführungsvariante der Erfindung sieht vor, daß die luftundurchlässige Schicht durch die beim Aufschäumen des Schaumstoffes entstehende Verhautung gebildet wird.

Die luftundurchlässige Schicht kann ferner, nach einem weiteren Merkmal der Erfindung, mit zumindest einer Verstärkungslage, insbesondere einem Gewebe, verstärkt werden. Diese Maßnahme ist insbesondere aus Gründen der Haltbarkeit von Vorteil.

Um die Verbindung zwischen der luftundurchlässigen Schicht und dem Schaumstoffring zu verbessern, kann nach einem weiteren Merkmal der Erfindung die luftundurchlässige Schicht eine durch Rippen, Noppen oder dergleichen vergrößerte Oberfläche aufweisen. Dabei können diese Rippen, Noppen oder dergleichen selbst ebenfalls eine strukturierte Oberfläche besitzen. Durch diese Maßnahmen wird auch eine gewisse Stütze für den Schaumstoffring zur Verfügung gestellt.

Um einen besonders guten Sitz des Schaumstoffringes mitsamt der luftundurchlässigen Schicht an der Felge sicherzustellen, ist es von Vorteil, wenn der Schaumstoffring mitsamt der luftundurchlässigen Schicht eine Kontur besitzt, die der Kontur der Felge angepaßt ist.

Um den Sitz des Schaumstoffringes an der Feige zu unterstützen, können zusätzlich Maßnahmen getroffen werden. So kann beispielsweise die luftundurchlässige Schicht an der Felge angeklebt werden. Bei einer weiteren Variante kann die luftundurchlässige Schicht seitlich des Schaumstoffringes hinausragen und mittels Spanneinrichtungen, wie Spannbändern oder dergleichen, an der Felge festgeklemmt werden.

Bei einer Maßnahme, durch die die Saugwirkung erhöht wird, ist vorgesehen, daß die luftundurchlässige Schicht bei der Montage des Reifen und/oder im Betrieb des Reifens von der Feige her mit Unterdruck beaufschlagt wird.

Eine weitere Maßnahme zur Unterstützung des Sitzes des Schaumstoffringes an der Felge sieht vor, daß der Schaumstoffring derart gefertigt oder befestigt wird, daß er unter Vorspannung auf der Felge sitzt.

Bei einer bevorzugten Ausführungsform der Erfindung besitzt der mit der luftundurchlässigen Schicht versehene Schaumstoffring einen zumindest im wesentlichen halbkreisförmigen Querschnitt.

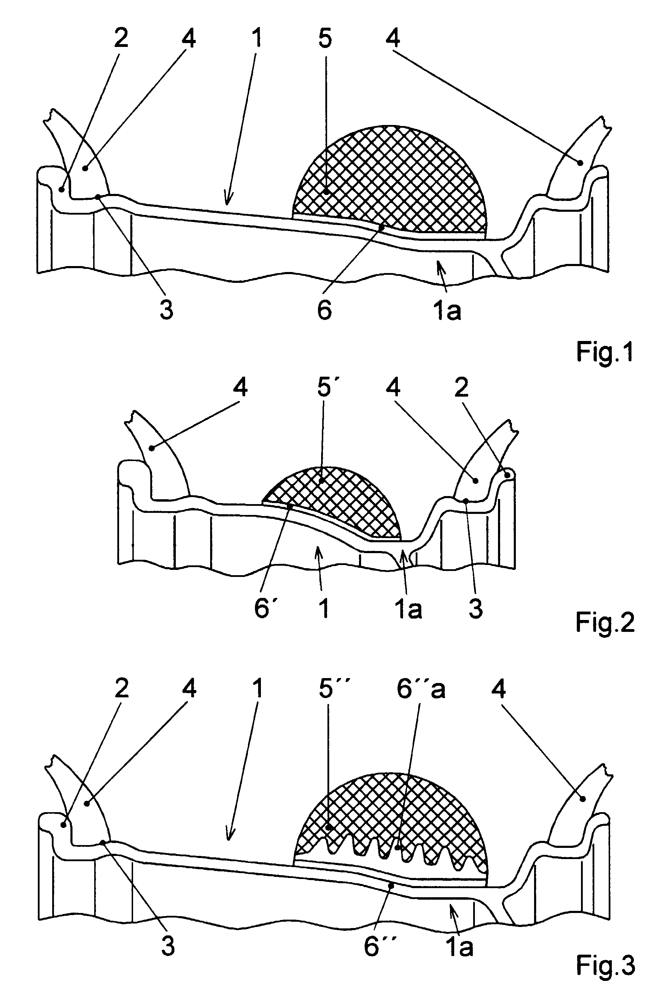

Weitere Merkmale, Vorteile und Einzelheiten der Erfindung werden nun anhand der Zeichnung, die einige Ausführungsbeispiele darstellt, näher beschrieben. Fig. 1 bis Fig. 3 sind schematische Darstellungen und zeigen jeweils einen Teilquerschnitt durch eine Feige mit angedeutetem Reifen und mit je einer Ausführungsvariante der Erfindung.

Fig. 1 bis Fig 3 zeigen jeweils einen Querschnitt durch einen Teilbereich einer Felge 1, wo diese mit Felgenhörnern 2 und Sitzflächen 3 für die Wulstbereiche 4 eines ansonsten nicht dargestellten Reifens versehen ist. Die in Fig. 1 und Fig. 3 dargestellte Feige 1 ist von ihrer Ausgestaltung her eine jener Felge für PKW-Reifen, die ein flaches Tiefbett 1a besitzen. Die in Fig. 2 dargestellte Feige 1 ist von jenem Typ, wo ein ausgeprägtes Tiefbett 1a vorgesehen ist. Es wird darauf verwiesen, daß die gegenständliche Erfindung jedoch weder auf einen bestimmten Typ Luftreifen, noch auf einen bestimmten Typ Felge eingeschränkt ist.

Bei sämtlichen dargestellten Ausführungsbeispielen sitzt auf der Feige 1 ein Ring 5, 5', 5'' aus schallabsorbierendem Material, insbesondere aus einem für eine Luftschallabsorption im Innenraum eines Reifens geeigneten, offenporigen Schaumstoff, beispielsweise einem PU-Schaum oder einem Melaminharzschaum.

In den einzelnen Zeichnungsfiguren besitzt der Schaumstoffring 5, 5' 5'' einen halbkreisförmigen oder im wesentlichen halbkreisförmigen Querschnitt. Es wird jedoch darauf verwiesen, daß im Rahmen der gegenständlichen Erfindung Schaumstoffringe unterschiedlichen Querschnitts eingesetzt werden können, beispielsweise Schaumstoffringe mit ovalem oder rechteckförmigem Querschnitt.

Wie bereits eingangs erwähnt, ist es bei luftschallabsorbierenden Einbauten im Reifen von Bedeutung, daß diese Einbauten ein möglichst geringes Gewicht besitzen, und daß sichergestellt ist, daß ihr Sitz auf der Felge derart ist, daß sie den bei höheren Geschwindigkeiten sich deutlich bemerkbar machenden Fliehkräften standhalten, sich nicht ablösen und sich nicht oder nur unwesentlich deformieren. Diese geforderte Fliehkraftbeständigkeit soll gewährleisten, daß sich die Schallabsorptionseigenschaften auch bei hohen Geschwindigkeiten möglichst nicht oder nur unwesentlich ändern. Darüber hinaus soll auch gewährleistet sein, daß die anderen Reifeneigenschaften, wie beispielsweise der Rundlauf, möglichst nicht beeinträchtigt werden.

Die Art und Weise, wie der Schaumstoffring 5, 5', 5'' an der Felge gehalten wird, ist daher von wesentlicher Bedeutung. Gemäß der gegenständlichen Erfindung wird der Schaumstoffring 5, 5' 5'', wie im Folgenden näher erläutert wird, durch den Innendruck im Reifen an die Felge 1 gepreßt, so daß er der Zentrifugalkraft, auch bei hohen Geschwindigkeiten, standhalten kann.

Gemäß dem in Fig. 1 dargestellten Ausführungsbeispiel ist der Schaumstoffring 5 an seiner der Felge 1 zugewandten bzw. seiner mit der Felge 1 in Kontakt tretenden Fläche mit einer luftundurchlässigen, insbesondere flexiblen Schicht 6 versehen. Da der Ring 5 aus offenporigem Schaum besteht, wird beim Befüllen des Reifens mit Luft die luftundurchlässige Schicht an die Felge 1 gepreßt. Die hier eintretende Wirkung ist somit mit der Wirkung eines Saugnapfes vergleichbar.

Die luftundurchlässige, insbesondere flexibel ausgeführte Schicht 6 kann nun aus Gummi oder aus einem Kunststoff, insbesondere einer Kunststoffolie, bestehen und mit dem Schaumstoffring 5, vor der Montage desselben, durch Kleben oder Vulkanisieren verbunden werden. Die luftundurchlässige Schicht 6 kann auch aus einer Schicht eines geschlossenzelligen Schaums bestehen, der mit dem Schaumstoffring 5 ebenfalls durch Vulkanisieren oder Kleben verbunden werden kann.

Dabei kann die luftundurchlässige Schicht 6 auch aus der sich beim Aufschäumen, beim Herstellen des Schaumstoffringes 5, bildenden Verhautung bestehen. An der dem Reifeninnenraum zugewandten Oberfläche des Schaumstoffringes 5 wäre eine Verhautung, zumindest eine zu starke Verhautung unerwünscht, da sie die Schallabsorption behindern könnte. Hier wird darauf geachtet, daß eine sich eventuell bildende Verhautung, die die akustischen Eigenschaften zu sehr beeinträchtigen würde, entfernt wird.

Die luftundurchlässige Schicht 6 kann ferner mit einem hier nicht dargestellten Gewebe oder dergleichen verstärkt sein. Gummi oder Kunststoff kann dabei schon bei der Herstellung der luftundurchlässigen Schicht entsprechend verstärkt werden, bei einer Ausführung aus geschlossenzelligem Schaum ist denkbar, daß dieser auf einer Verstärkungslage, etwa einem Gewebe, oder mit einer solchen aufgeschäumt wird.

Wie Fig. 1 zeigt entspricht die Kontur des mit der luftundurchlässigen Schicht 6 versehenen Bereiches des Schaumstoffringes 5 der Kontur der Felge 1, dort, wo die Auflage des Schaumstoffringes 5 auf der Felge 1 vorgesehen ist.

Fig. 2 zeigt eine Ausführungsform der Erfindung, wo die Felge 1 mit einem ausgeprägten Tiefbett 1a versehen ist. Hier ist zu sehen, daß der im Querschnitt ebenfalls im wesentlichen halbkreisförmig ausgestaltete Schaumstoffring 5' zum Teil im Tiefbett 1a der Felge 1 sitzt. Insbesondere bei einer derartigen Ausführungsform ist es günstig, wenn darauf geachtet wird, daß der Schaumstoffring 5' mitsamt der luftundurchlässigen Schicht 6', die wie bei obigem Ausführungsbeispiel beschrieben ausgestaltet sein kann, der Kontur der Felge 1 entsprechend angepaßt ist, um die erwünschte Wirkung, daß die luftundurchlässige Schicht 6' des Schaumstoffringes 5' infolge des Fülldruckes an die Feige gepreßt wird, zu gewährleisten.

Wird der auf die Feige 1 aufgebrachte Schaumstoffring 5,5' durch Anrollen mit einem geeignet geformten Rollwerkzeug so angedrückt, daß etwaige Luft zwischen der Schicht 6,6' und der Felge 1 herausgedrückt wird, so wird die oben erwähnte Saugnapfwirkung verstärkt.

Fig. 3 zeigt eine Ausführungsvariante der Erfindung, wo die luftundurchlässige Schicht 6'' zum Vergrößern ihrer mit dem Schaumstoffring 5'' in Kontakt tretenden Oberfläche mit Rippen 6''a versehen ist. Diese Rippen 6''a verlaufen bei auf der Feige 1 montiertem Schaumstoffring 5'' in Umfangsrichtung. In diesem Fall wird die luftundurchlässige Schicht 6'' aus Gummi, Kunststoff oder aus einem geschlossenzelligen Schaum gebildet. Die Verbindung der luftundurchlässigen Schicht 6'' mit dem Schaumstoffring 5'' kann hier derart erfolgen, daß die Schicht 6'' in die Form zum Ausschäumen des Schaumstoffes eingelegt und mit diesem beim Ausschäumen des Schaumes verbunden wird. Alternativ dazu kann der fertige Schaum entsprechend geschnitten und mit der Schicht 6'' durch Kleben verbunden werden.

An Stelle von in Umfangsrichtung umlaufenden Rippen 6''a können auch einzelne Noppen, Erhebungen oder dergleichen zur Vergrößerung der Oberfläche vorgesehen werden. Die vergrößerte Oberfläche verbessert die Haftung des Schaumstoffringes 5'' an der luftundurchlässigen Schicht 6'' und bietet eine gewisse Stütze für den Schaum. Sowohl die dargestellten Rippen 6''a als auch die erwähnten Noppen und dergleichen können zusätzlich eine strukturierte Oberfläche mit Erhebungen oder ähnlichem kleineren Querschnitts aufweisen. Bei sämtlichen Maßnahmen zum Vergrößern der Oberfläche ist es jedoch günstig, darauf zu achten, daß das Gewicht der luftundurchlässigen Schicht 6'' möglichst klein bleibt.

Bei sämtlichen dargestellten und beschriebenen Ausführungsformen kann der Schaumstoffring 5, 5', 5'' vor der Montage des Reifens vorzugsweise bereits als geschlossener Ring über die Felge gezogen werden oder, alternativ dazu, an zumindest einer Stelle aufgeschnitten auf der Felge 1 positioniert und an den offenen Seiten durch Kleben wieder geschlossen werden. Es versteht sich von selbst, daß bezüglich der Montagemöglichkeiten die tatsächlichen Gegebenheiten zu berücksichtigen sind. Dabei kann auch so vorgegangen werden, daß der Reifen mit seinem einen Wulst auf die Felge gezogen, anschließend der Ring 5,5',5'' montiert und schließlich die Montage des Reifens komplettiert wird.

Um ein unbeabsichtigtes Lösen des Schaumstoffringes von der Felge in jedem Fall zu unterbinden, können zusätzlich weitere Maßnahmen getroffen werden. So ist es möglich, den Schaumstoffring mit seiner luftundurchlässigen Schicht an der Felge anzukleben.

Es kann auch der Schaumstoffring mitsamt der luftundurchlässigen Schicht unter Vorspannung auf der Felge sitzen.

Um in jedem Fall einen unerwünschten Druckausgleich zu vermeiden, kann die luftundurchlässige Schicht ferner so ausgeführt werden, daß sie seitlich des Schaumstoffringes leicht übersteht und mittels gesonderter Spannbänder oder dergleichen an der Felge befestigt wird. Dabei sind auch weitere Maßnahmen denkbar, die luftundurchlässige Schicht mit dem Schaumstoffring an der Felge zusätzlich zu sichern.

Das Aufrechterhalten der erwünschten Druckdifferenz kann ferner durch gesonderte Maßnahmen unterstützt werden. Hier wäre es denkbar, wenn über die Felge eine Art Ansaugen des Schaumstoffringes, etwa durch Öffnungen in der Feige, wo Unterdruck wirkt, erfolgt. Dabei kann der Unterdruck bei der Montage und/oder auch im Betrieb aufrechterhalten werden.

## Patentansprüche

1. Kraftfahrzeugrad mit einem auf eine Felge aufgebrachten Reifen, in dessen Innenraum, auf der Felge umlaufend, ein schallabsorbierender Ring aus offenporigem Schaumstoff untergebracht ist, dadurch gekennzeichnet, daß der Schaumstoffring (5, 5', 5'') an seiner mit der Felge (1) in Kontakt tretenden Fläche mit einer luftundurchlässigen Schicht (6, 6', 6'') versehen ist.

2. Kraftfahrzeugrad nach Anspruch 1, dadurch gekennzeichnet, daß die luftundurchlässige Schicht (6,6',6'') flexibel ausgeführt ist.

3. Kraftfahrzeugrad nach Anspruch 1 oder 2, dadurch gekennzeichnet, daß die luftundurchlässige Schicht (6, 6', 6'') aus Gummi oder Kunststoff, insbesondere aus einer Kunststoffolie, besteht.

4. Kraftfahrzeugrad nach Anspruch 1 oder 2, dadurch gekennzeichnet, daß die luftundurchlässige Schicht (6, 6'; 6'') aus einer Schicht aus geschlossenzelligem Schaum besteht.

5. Kraftfahrzeugrad nach einem der Ansprüche 1 bis 4, dadurch gekennzeichnet, daß die luftundurchlässige Schicht (6, 6', 6'') mit dem Schaumstoffring (5, 5', 5'') durch Kleben verbunden ist.

6. Kraftfahrzeugrad nach einem der Ansprüche 1 bis 4, dadurch gekennzeichnet, daß die luftundurchlässige Schicht (6, 6', 6'') mit dem Schaumstoffring (5, 5', 5'') durch Vulkanisieren verbunden ist.

7. Kraftfahrzeugrad nach einem der Ansprüche 1 bis 6, dadurch gekennzeichnet, daß die luftundurchlässige Schicht (6, 6', 6'') mit dem Schaumstoff beim Aufschäumen desselben verbunden wird.

8. Kraftfahrzeugrad nach Anspruch 1 oder 2, dadurch gekennzeichnet, daß die luftundurchlässige Schicht (6, 6', 6'') durch die beim Aufschäumen des Schaumstoffes entstehende Verhautung gebildet ist.

9. Kraftfahrzeugrad nach einem der Ansprüche 1 bis 7, dadurch gekennzeichnet, daß die luftundurchlässige Schicht (6, 6', 6'') mit zumindest einer Verstärkungslage, insbesondere einem Gewebe, verstärkt ist.

10. Kraftfahrzeugrad nach einem der Ansprüche 1 bis 7, dadurch gekennzeichnet, daß die luftundurchlässige Schicht (6'') eine durch Rippen (6''a), Noppen oder dergleichen vergrößerte Oberfläche aufweist.

11. Kraftfahrzeugrad nach Anspruch 10, dadurch gekennzeichnet, daß die Rippen (6'a), Noppen oder dergleichen eine strukturierte Oberfläche besitzen.

12. Kraftfahrzeugrad nach einem der Ansprüche 1 bis 11, dadurch gekennzeichnet, daß der Schaumstoffring (5, 5', 5'') mitsamt der luftundurchlässigen Schicht (6, 6', 6'') eine Kontur besitzt, die der Kontur der Felge (1) angepaßt ist.

13. Kraftfahrzeugrad nach einem der Ansprüche 1 bis 12, dadurch gekennzeichnet, daß die luftundurchlässige Schicht (6, 6', 6'') an der Felge angeklebt ist.

14. Kraftfahrzeugrad nach einem der Ansprüche 1 bis 13, dadurch gekennzeichnet, daß die luftundurchlässige Schicht seitlich des Schaumstoffringes hinaus ragt und mittels Spanneinrichtungen, wie Spannbändern oder dergleichen, an der Felge festgeklemmt ist.

15. Kraftfahrzeugrad nach einem der Ansprüche 1 bis 14, dadurch gekennzeichnet, daß die luftundurchlässige Schicht bei der Montage des Reifens und/oder im Betrieb des Reifens von der Felge her mit Unterdruck beaufschlagt wird.

16. Kraftfahrzeugrad nach einem der Ansprüche 1 bis 15, dadurch gekennzeichnet, daß der Schaumstoffring (5,5',5'') unter Vorspannung auf der Felge (1) sitzt.

17. Kraftfahrzeugrad nach einem der Ansprüche 1 bis 16, dadurch gekennzeichnet, daß der Schaumstoffring (5, 5', 5'') einen zumindest im wesentlichen halbkreisförmigen Querschnitt aufweist.
